# EUROPEAN PATENT APPLICATION

(11) **EP 2 555 360 A1**
(43) Date of publication of application: **06.02.2013**
(21) Application number: 11176166.4
(22) Date of filing: 01.08.2011
(51) Int. Cl.: H02B 11/04, H02B 13/02

(54) **Three pole insulating partition for a medium voltage switchgear**

(71) Applicant: ABB Technology AG, 8050 Zürich (CH)
(72) Inventor: Pagani, Marco, I-24047 Treviglio (IT)
(74) Representative: Giavarini, Francesco

(57) **Abstract**

A three pole insulating partition (1) for a medium voltage switchgear (100), that comprises an insulating body (10) having a planar structure with a first, upper, surface (11), and a second, lower, surface (12), said first upper surface (11) being provided with a first (21), a second (22) and a third (23) seat for a first (31), a second (32), and a third (33) connection terminal for connection to a bus-bar system, said second lower surface (12) being provided with a fourth (24), a fifth (25), and a sixth (26) seat for a fourth (34), a fifth (35) and a sixth (36) connection terminal for connection with internal equipment of said medium voltage switchgear (100); a first (41), a second (42), a third (43), and a fourth (44) insulating parallel walls being integrally formed on said first upper surface (11) contiguously to said first (21), second (22) and third (23) seats; a fifth (45), sixth (46), seventh (47) and eighth (48) insulating parallel walls being integrally formed on said second lower surface (12) contiguously to said fourth (24), fifth (25), and sixth (26) seats; said insulating body (10) being provided with coupling means (50, 60) for coupling with said medium voltage switchgear (100).

## Description

The present invention relates to a three pole insulating partition for medium voltage switchgear with improved features. For the purposes of the present application the term medium voltage is referred to applications in the range from 1 kV up to some tens of kV, for example 52 kV.

Medium voltage switchgear are well known in the art and they usually consists of a casing which defines an internal volume for housing internal equipment, such as a circuit breaker assembly, a bus-bar assembly, as well as other systems, such as a feeder system and possible auxiliary equipment.

Depending on the application, the need of having an insulating partition, as well as the need of having a mechanical support for the bus-bars may complicate the design and the assembly of the switchgear, in particular the assembly and the connection of the bus-bar system.

It is therefore an object of the present invention to provide a three pole insulating partition for medium voltage switchgear in which the above-mentioned drawbacks are avoided or at least reduced.

More in particular, it is an object of the present invention to provide a three pole insulating partition for medium voltage switchgear which has also the function of supporting the bus-bars.

As a further object, the present invention is aimed at a three pole insulating partition for medium voltage switchgear having a simple structure, and easy to be manufactured.

A further object of the present invention is to provide a three pole insulating partition for medium voltage switchgear which is extremely easy to manipulate and allows an easy way of assembling it on the switchgear frame without loosing the function of mechanical support and strength for the busbar compartment.

Another object of the present invention is to provide a three pole insulating partition assembly, in which it is possible to preliminary mount busbar connections on the insulating partition itself and then insert the entire assembly in the switchgear .

Still another object of the present invention is to provide a medium voltage switchgear with reduced manufacturing, installation and maintenance costs.

Thus, the present invention relates to a three pole insulating partition for a medium voltage switchgear, which is characterized in that it comprises an insulating body having a planar structure with a first, upper, surface, and a second, lower, surface, said first upper surface being provided with a first, a second and a third seat for a first, a second, and a third connection terminal for connection to a bus-bar system, said second lower surface being provided with a fourth, a fifth, and a sixth seat for a fourth, a fifth, and a sixth third connection terminal for connection with internal equipment of said medium voltage switchgear; a first, a second, a third, and a fourth insulating parallel walls being integrally formed on said first upper surface contiguously to said first, second and third seats; a first, a fifth, sixth, seventh and eighth insulating parallel walls being integrally formed on said second lower surface contiguously to said fourth, fifth, and sixth seats; said insulating body being provided with coupling means for coupling with said medium voltage switchgear.

In this way, it is possible to overcome some of the disadvantages and drawbacks of the three pole insulating partition of the known art.

In particular, the three pole insulating partition is used as partition and busbar support. In this way, the shape of the monoblock is greatly simplified a lot, and the resulting monoblock is nearly a flat element, suitable to be easily molded with epoxy resin, polyester with glass fiber and also thermoplastic.

Additionally, it is extremely easy to manipulate and allows an easy way of assembling it on the switchgear frame by a single operator without special tools and positioning devices.

Also, with the new monoblock, it is possible to preliminary mount busbar connections on the monoblock itself, thereby obtaining a three pole insulating partition assembly that can be easily inserted into the switchgear. This reduces a lot the time required for the assembly operation, fully in line with lean production principles.

According to a preferred embodiment of the three pole insulating partition according to the invention, said first, second, and third seats are positioned in correspondence of said fourth, fifth, and sixth seats.

Preferably, the first upper surface is provided with a plurality of reinforcing ribs integrally formed thereon .

In a particularly preferred embodiment of the three pole insulating partition according to the invention, said insulating body is provided with a first, a second, and a third slot respectively putting said first, second and third seat in communication with said fourth, fifth, and sixth seat.

Advantageously, in such a case, said first and fourth, second and fifth, and third and sixth seats are respectively provided with first, second and third through holes for fixing means for fixing respectively said first and fourth, second and fifth, and third and sixth connection terminals.

Preferably the coupling means of the three pole insulating partition according to the invention comprise a first and a second lateral cutouts on opposite edges of said insulating body for coupling with firs and second coupling plates of said medium voltage switchgear. In this way the three pole insulating partition can be easily assembled by a single operator to a medium voltage switchgear with a simple sliding action.

In a further aspect the present invention also relates to three pole insulation partition assembly which is characterized in that it comprises a three pole insulating partition as described herein, and further comprises a first, a second, and a third connection terminal for connection to a bus-bar system, as well as a fourth, a fifth and a sixth connection terminal for connection with internal equipment of said medium voltage switchgear.

Preferably said first, second, and third connection terminal respectively comprises a flat portion for coupling with said insulating body and a shaped portion for coupling with a corresponding bus-bar.

Also preferably, said fourth, fifth and sixth connection terminal respectively comprises a first portion for coupling with the corresponding first, second, and third connection terminal and with said insulating body and a second portion for coupling with internal equipment of said medium voltage switchgear.

Advantageously, in such a case, said first portion of said fourth, fifth and sixth connection terminal is respectively positioned in said first, second and third seat between said flat portion and said first upper surface, said second portion of said fourth, fifth and sixth connection terminal entering into said fourth, fifth, and sixth seat through said first, second, and third slot.

A medium voltage switchgear comprising a three pole insulation partition assembly as described herein, is also part of the present invention.

Further characteristics and advantages of the invention will emerge from the description of preferred, but not exclusive embodiments of a medium voltage switchgear according to the invention, non-limiting examples of which are provided in the attached drawings, wherein:

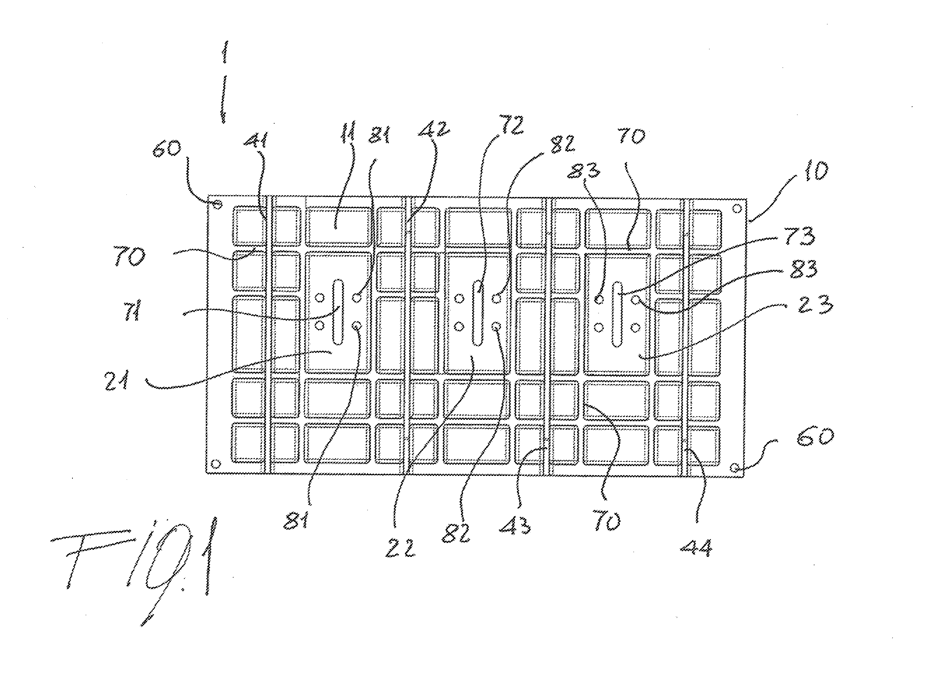

Figure 1 is a plan view of a three pole insulating partition according to the invention;
Figure 2 is a side view of a three pole insulating partition assembly according to the invention;
Figure 3 is a plan view of the three pole insulating partition assembly of figure 2;
Figure 4 is a section view of the three pole insulating partition assembly of figure 2;
Figure 5 is a prospect view of the three pole insulating partition assembly of figure 2;
Figure 6 is a prospect view of a medium voltage switchgear according to the invention.

With reference to the attached figures, a three pole insulating partition according to the invention, designed with the reference number 1, comprises, in its more general definition, an insulating body 10 having a planar structure with a first upper,surface 11, and a secondlower surface 12. For the purposes of the present invention, the terms upper and lower are referred to the operating position of the three pole insulating partition when inserted into the corresponding medium voltage switchgear 100.

Said first upper surface 11 is provided with a first 21, a second 22 and a third 23 seat for a corresponding first 31, second 32, and a third 33 connection terminal for connection to a bus-bar system

In turn, said second lower surface 12 is provided with a fourth 24, a fifth 25, and a sixth 26 seat for a fourth 34, a fifth 35 and a sixth 36 connection terminal for connection with internal equipment of said medium voltage switchgear 100, e.g. for connection with the terminals of a circuit breaker assembly housed into said switchgear 100.

Then, a first insulating parallel wall 41, a second insulating parallel wall 42, a third insulating parallel wall 43, and a fourth insulating parallel wall 44 are integrally formed on said first upper surface 11 contiguously to said first 21, second 22 and third 23 seats. In practice, as shown in the attached figure, said first 41 and fourth 44 insulating parallel walls are positioned on opposite sides of the insulating body 10, contiguously respectively to said first 21 and third 23 seats, while said second 42 and third 43 insulating parallel walls are interposed between said first 21 and second 22 seats and between said second 22 and third 23 seats, respectively.

Similarly, a fifth 45, sixth 46, seventh 47 and eighth 48 insulating parallel walls are integrally formed on said second lower surface 12 contiguously to said fourth 24, fifth 25, and sixth 26 seats. In practice, as shown in the attached figure, said fifth 45 and eighth 48 insulating parallel walls are positioned on opposite sides of the insulating body 10, in correspondence of said first 41 and fourth 44 insulating parallel walls, contiguously to said fourth 24 and sixth 26 seats, respectively, while said sixth 46 and seventh 47 insulating parallel walls are interposed between said fourth 24 and fifth 25 seats and between said fifth 25 and sixth 26 seats, respectively, in correspondence of said second 42 and third 43 insulating parallel walls.

Moreover, the insulating body 10 of the three pole insulating partition 1 according to the invention is provided with coupling means 50, 60 for coupling with said medium voltage switchgear100.

As shown in the attached figures said first 21, second 22 and third 23 seats are preferably positioned in correspondence of said fourth 24, fifth 25, and sixth 26 seats. In practice the first 21 and fourth 24, second 22 and fifth 25, and third 23 and sixth 26 seats have advantageously the same relative position with respect to the insulating body 10.

In order to improve the mechanical stiffness of the three pole insulating partition 1 according to the invention, its first upper surface 11 is provided with a plurality of reinforcing ribs 70 integrally formed on said first upper surface 11. The same structure can be present also on the second lower surface 12.

According to a preferred embodiment of the three pole insulating partition 1 of the invention, the insulating body 10 is advantageously provided with a first slot 71, a second slot 72, and a third slot 73 putting said first seat 21, said second seat 22 and said third 23 in communication with said fourth seat 24, said fifth seat 25, and sixth seat 26 respectively. As better explained hereinafter, such structure, together with a particular design of the connection terminals, greatly simplifies the structure and the mounting of the three pole insulating partition assembly of the invention.

In order to make easier the assembly of the connection terminals, the three pole insulating partition 1 of the invention further comprises, in correspondence of said first and fourth seats 21,24, second and fifth seats 22,25, and third and sixth seats 23,26 first 81, second 82 and third 83 through holes, respectively for means for fixing said first and fourth connection terminals 31,34, said second and fifth connection terminals 32,35, and said third and sixth 33,36 connection terminals, respectively.

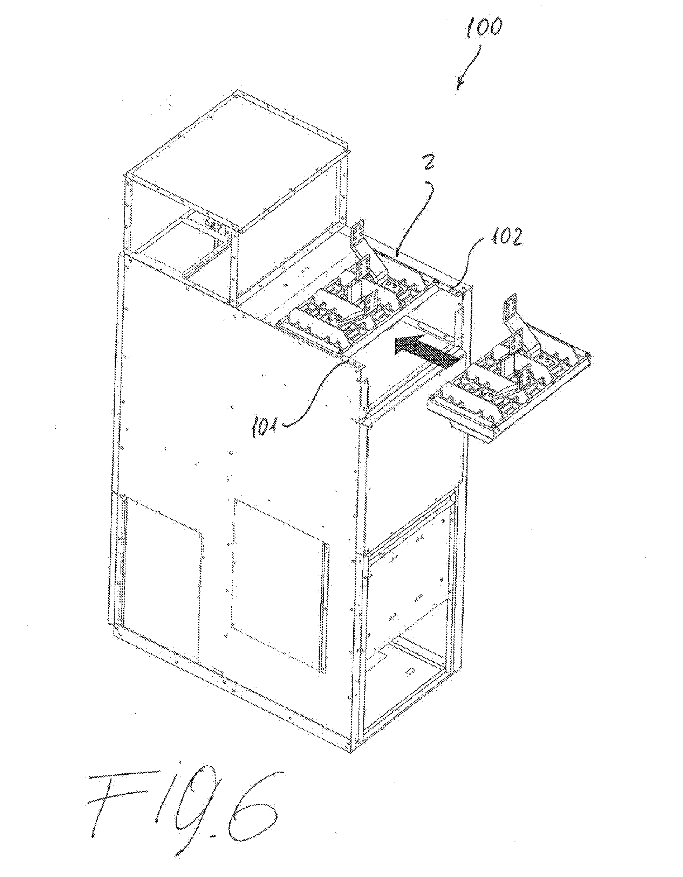

In a largely preferred embodiment of the three pole insulating partition 1 according to the invention, said coupling means 50 comprise a first lateral cutout 51 and a second lateral cutout 52 on opposite edges of said insulating body 10 for coupling with first and second coupling plates 101, 102 of said medium voltage switchgear 100. As shown in figure 6, thanks to this feature, a single operator can assemble the three pole insulating partition to a medium voltage switchgear with a simple sliding action in the direction of the thick black arrow depicted in said figure.

The three pole insulating partition 1 according to the invention can also comprise coupling means 60, e.g. holes for fixing means such as screw means, for fixing it to the frame of the medium voltage switchgear 100.

The three pole insulating partition 1 according to the invention can be easily made as a monoblock including the substantially flat insulating body 10, the insulating parallel walls 41-48 and the reinforcing ribs 70 using conventional molding techniques.

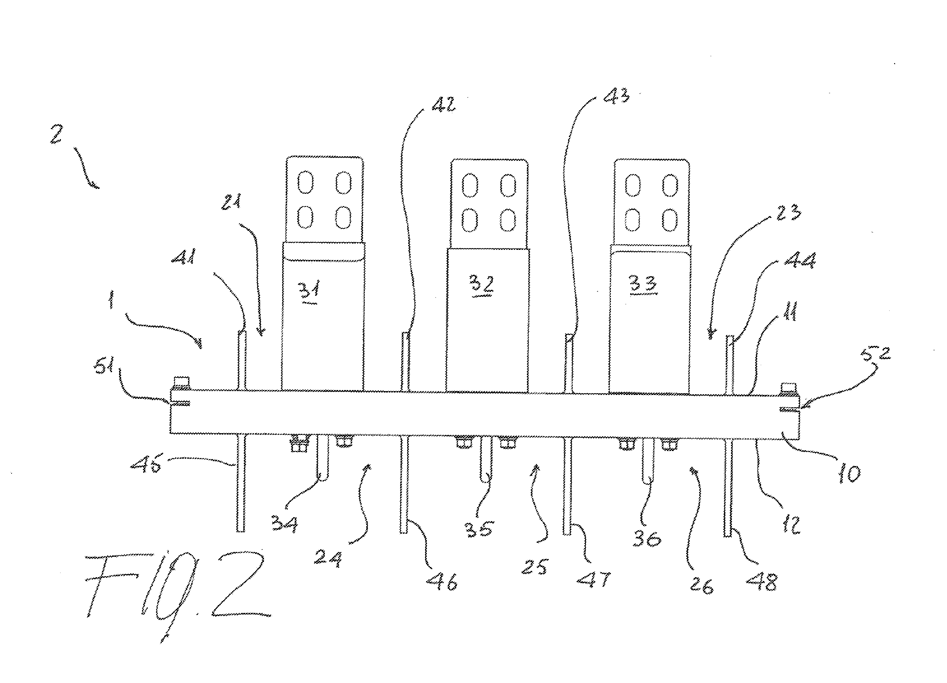

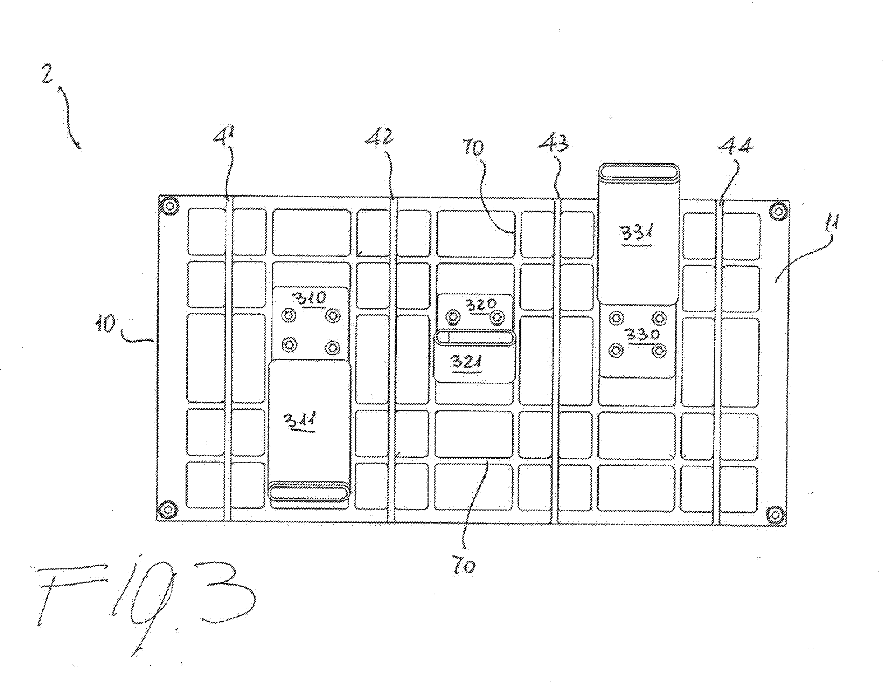

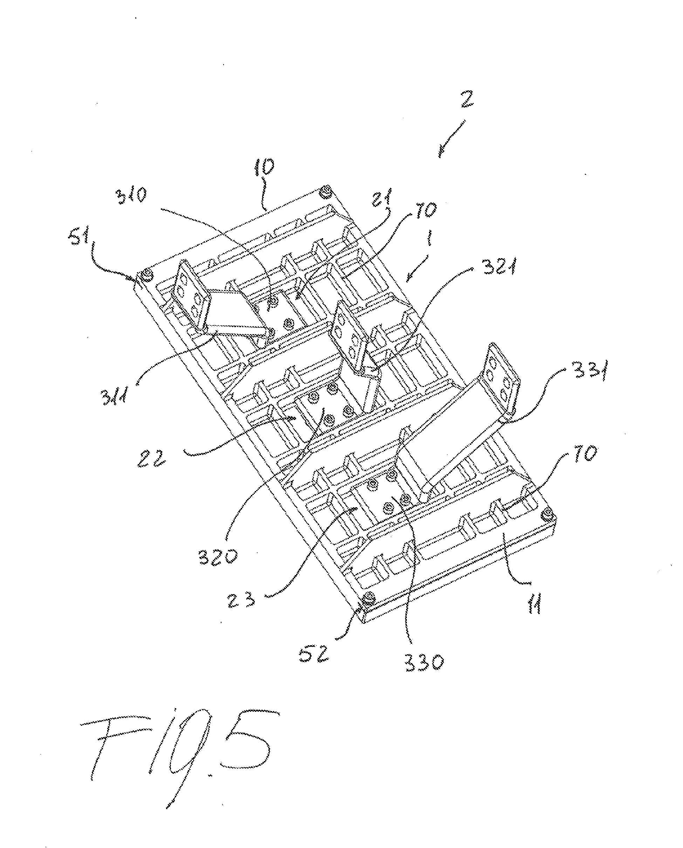

With particular reference to figures 2-5, a three pole insulation partition assembly 2 according to the invention generally comprises a three pole insulating partition 1 as described herein. On the first upper surface 11 of the three pole insulating partition 1 there are a first connection terminal 31, a second connection terminal 32, and a third connection terminal 33 for connection to a bus-bar system, while on the second lower surface there are a fourth connection terminal 34, a fifth connection terminal 35 and a sixth connection terminal 36 for connection with internal equipment of said medium voltage switchgear 100, e.g. a circuit breaker (not shown).

According to a particular embodiment of the three pole insulation partition assembly 2 of the invention, said first 31, second 32, and third 33 connection terminals comprises each a flat portion 310, 320, 330, respectively, for coupling with said insulating body 10 and a shaped portion 311, 321, 331, respectively for coupling with a corresponding bus-bar. The geometry of the shaped portions 311, 321, 331 can be designed in order to adapt to the layout of the bus-bars which normally have a stacked configuration.

Also, said fourth 34, fifth 35 and sixth 36 connection terminals comprises each: a first portion 340, 350, 360, respectively for coupling with the corresponding first 31, second 32, and third 33 connection terminals and with said insulating body 10; and a second portion 341, 351, 361, respectively, for coupling with internal equipment of said medium voltage switchgear 100.

In practice, in such an embodiment the first portions 340, 350, 360 allow both the electrical connection to the corresponding first 31, second 32, and third 33 connection terminals and the mechanical connection to the insulating body 10, while the second portions 341, 351, 361 allow the electrical connection with internal equipment of the medium voltage switchgear 100, e.g. a circuit breaker.

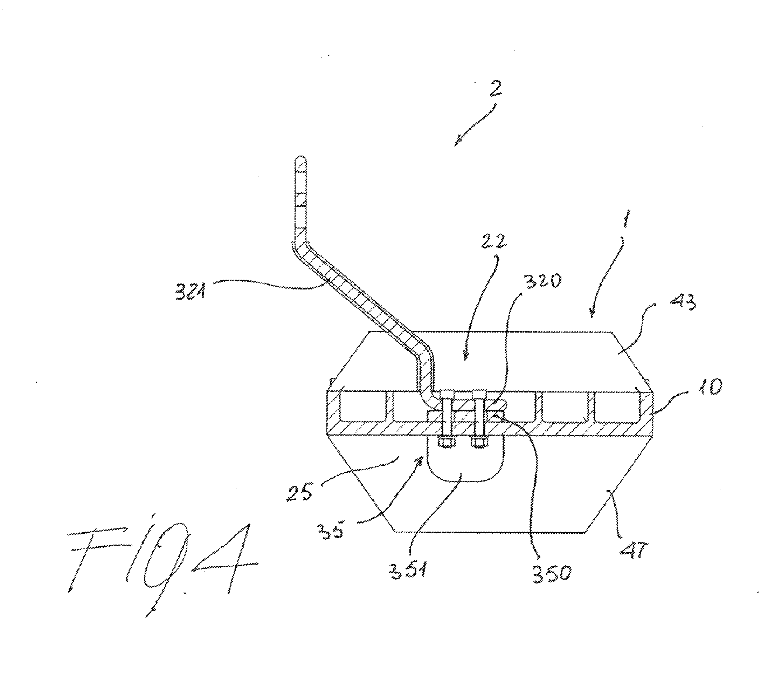

In such a case, as shown in figure 4, preferably the first portions 340, 350, 360 of said fourth 34, fifth 35 and sixth 36 connection terminals are positioned in said first 21, second 22 and third 23 seats, respectively, between the flat portion 310, 320, 330 of said first 31, second 32, and third 33 connection terminals and said first upper surface 11. Moreover, said second portions 341, 351, 361 of said fourth 34, fifth 35 and sixth 36 connection terminals enter into said fourth 24, fifth 25, and sixth 26 seats through said first 71, second 72, and third 73 slots, respectively.

In other words, according to this embodiment, the fourth 34, fifth 35 and sixth 36 connection terminals have each: a first flat portion 340, 350, 360 (matching the flat portion 310, 320, 330 of said first 31, second 32, and third 33 connection terminals) positioned in the seats 21,22,23, respectively; and a second portion 341, 351, 361, perpendicular to said first portion 340, 350, 360, inserted into the slots 71, 72 73, and emerging into the seats 24, 25, 26, respectively. In this way it is possible to fix simultaneously the first and fourth, second and fifth, third and sixth connection terminals to the insulating body 10, using screw means and the holes 81, 82 and 83.

In this way the assembling operation of the three pole insulation partition assembly 2 of the invention can be greatly simplified.

The three pole insulation partition for a medium voltage switchgear thus conceived may undergo numerous modifications and come in several variants, all coming within the scope of the inventive concept. Moreover, all the component parts described herein may be substituted by other, technically equivalent elements. In practice, the component materials and dimensions of the device may be of any nature, according to need and the state of the art.

## Claims

1. A three pole insulating partition (1) for a medium voltage switchgear (100), **characterized in that** it comprises an insulating body (10) having a planar structure with a first upper surface (11), and a second lower surface (12), said first upper surface (11) being provided with a first (21), a second (22) and a third (23) seat for a first (31), a second (32), and a third (33) connection terminal, respectively for connection to a bus-bar system, said second lower surface (12) being provided with a fourth (24), a fifth (25), and a sixth (26) seat for a fourth (34), a fifth (35) and a sixth (36) connection terminal, respectively, for connection with internal equipment of said medium voltage switchgear (100); a first (41), a second (42), a third (43), and a fourth (44) insulating parallel walls being integrally formed on said first upper surface (11) contiguously to said first (21), second (22) and third (23) seats; a fifth (45), sixth (46), seventh (47) and eighth (48) insulating parallel walls being integrally formed on said second lower surface (12) contiguously to said fourth (24), fifth (25), and sixth (26) seats; said insulating body (10) being provided with coupling means (50, 60) for coupling with said medium voltage switchgear (100).

2. The three pole insulating partition (1) according to claim 1, **characterized in that** said first (21), second (22) and third (23) seats are positioned in correspondence of said fourth (24), fifth (25), and sixth (26) seats, respectively.

3. The three pole insulating partition (1) according to claim 1 or 2, **characterized in that** said first upper surface (11) is provided with a plurality of reinforcing ribs (70) integrally formed on said first upper surface (11).

4. The three pole insulating partition (1) according to one or more of the previous claims, **characterized in that** said insulating body (10) is provided with a first (71), a second (72), and a third (73) slot putting said first (21), second (22) and third (23) seat in communication with said fourth (24), fifth (25), and sixth (26) seat, respectively.

5. The three pole insulating partition (1) according to claim 4, **characterized in that** said first and fourth (21, 24), second and fifth (22, 25), and third and sixth (23, 26) seats are provided with first (81), second (82) and third (83) through holes for fixing means for fixing said first and fourth (31, 34), second and fifth (32, 35), and third and sixth (33, 36) connection terminals, respectively.

6. The three pole insulating partition (1) according to one or more of the previous claims, **characterized in that** said coupling means (50) comprise a first lateral cutout (51) and a second lateral cutout (52) on opposite edges of said insulating body (10) for coupling with first and second (101, 102) coupling plates of said medium voltage switchgear (100).

7. A three pole insulation partition assembly (2) **characterized in that** it comprises a three pole insulating partition (1) according to one or more of claims from 1 to 6, a first (31), a second (32), and a third (33) connection terminal for connection to a bus-bar system, and a fourth (34), a fifth (35) and a sixth (36) connection terminal for connection with internal equipment of said medium voltage switchgear (100).

8. The three pole insulation partition assembly (2) according to claim 7, **characterized in that** said first (31), second (32), and third (33) connection terminal comprises each a respective flat portion (310, 320, 330) for coupling with said insulating body (10) and a respective shaped portion (311, 321, 331) for coupling with a corresponding bus-bar.

9. The three pole insulation partition assembly (2) according to claims 7 or 8, **characterized in that** said fourth (34), fifth (35) and sixth (36) connection terminals comprises each a respective first portion (340, 350, 360) for coupling with the corresponding first (31), second (32), and third (33) connection terminal and with said insulating body (10), and a corresponding second portion (341, 351, 361) for coupling with internal equipment of said medium voltage switchgear (100).

10. The three pole insulation partition assembly (2) according to claim 9, **characterized in that** said respective first portion (340, 350, 360) of said fourth (34), fifth (35) and sixth (36) connection terminals is positioned in said first (21), second (22) and third (23) seat, respectively, between said respective flat portion (310, 320, 330) and said first upper surface (11), said second portion (341, 351, 361) of said fourth (34), fifth (35) and sixth (36) connection terminal entering into said fourth (24), fifth (25), and sixth (26) seat through said first (71), second (72), and third (73) slot, respectively.

11. A medium voltage switchgear (100) comprising a three pole insulation partition assembly (2) according to one or more of claims from 7 to 10.
